# EUROPEAN PATENT APPLICATION

(11) **EP 4 804 101 A1**
(43) Date of publication of application: **09.09.2026**
(21) Application number: 25305284.9
(22) Date of filing: 03.03.2025
(51) Int. Cl.: G06Q 20/36, G06Q 20/38, G06Q 20/40, G06Q 20/42

(54) **METHOD FOR MANAGING A PAYMENT SERVICE**

(71) Applicant: THALES DIS FRANCE SAS, 92190 Meudon (FR)
(72) Inventor: FAHER, Mourad, 78160 Marly Le Roi (FR); GASTON GUIRAO, Lorenzo, 78180 Montigny-le-Bretonneux (FR); SADAGOPAN, Sridharan, 680274 Singapore (SG)
(74) Representative: Grevin, Emmanuel

(57) **Abstract**

The invention is a method for enrolling a payment instrument issued by remote financial entity (30) for a user (50) in a communicating equipment (10) hosting an identification wallet (20). Following receipt by the remote financial entity of an indication of a successful authentication and identification of said user by the identification wallet, the method comprises:
generating, by the remote financial entity, credentials (31) associated to a bank account of the user;
provisioning, by the remote financial entity, a financial namespace (21) in the identification wallet, said financial namespace comprising the credentials and a data element (22) identifying a financial transaction action to be triggered upon receipt of a document request targeting the data element; and
associating, by the remote financial entity, said credentials (31) with said data element (22).

## Description

### (Field of the invention)

The present invention relates to methods for managing payment services. It relates particularly to methods of enrolling a payment instrument in a communicating apparatus.

### (Background of the invention)

Management of Identity proof of an individual is a domain where the end user may have a digital identity wallet installed in their portable appliance. Such an identity wallet may store their identity credentials. Typically, these identity credentials are provided by a trusted entity which may be a centralized entity like a state.

The Regulation (EU) 2024/1183 enforces the recognition of EUID Wallet-based identification by financial services, notably for the enrolment process, for instance a user installing a payment capability onto their mobile phone.

### (Summary of the Invention)

However, there is no protocol currently proposed to implement such association between an identification means and a payment means.

There is need to provide a way to ease deployment of payment capabilities in the existing identity wallet ecosystem.

The invention aims at solving the above-mentioned technical problem.

An object of the present invention is a method for enrolling a payment instrument issued by remote financial entity for a user in a communicating equipment hosting an identification wallet. Following receipt by the remote financial entity of an indication of a successful authentication and identification of said user by the identification wallet, the method comprises the following steps:
- generating, by the remote financial entity, credentials associated to a bank account of the user;
- provisioning, by the remote financial entity, a financial namespace in the identification wallet, said financial namespace comprising the credentials and a data element identifying a financial transaction action to be triggered upon receipt of a document request targeting the data element; and
- associating, by the remote financial entity, said credentials with said data element.

Advantageously, following receipt by the identification wallet of said document request, the document request being sent by a payment terminal for performing a payment transaction, the method may further comprise the following steps:
- a successful verification by said identification wallet of consent of said user for said payment transaction triggers generating by the identification wallet both an attestation of said credentials and a crypto-proof assigned to the payment transaction as defined by the financial transaction action which is identified by the data element;
- following receipt by the payment terminal of a response comprising both said attestation and crypto-proof, forwarding said response to the remote financial entity; and
- authorizing the payment transaction by the remote financial entity only if both said attestation and crypto-proof are found to be valid by the remote financial entity.

Advantageously, the document request may comprise both the data element, a type of the payment transaction and an amount of the payment transaction.

Advantageously, the credentials may comprise both a first reference of bank account of the user and a second reference of a secret key.

Advantageously, the identification wallet may be a mobile driver's license wallet or an EU Digital Identity wallet as defined by eIDAS specifications.

Advantageously, the communicating equipment may be a smartphone, a digital watch or a connected wearable apparatus.

Another object of the present invention is a system for enrolling a payment instrument issued by remote financial entity for a user in a communicating equipment hosting an identification wallet. The system comprises the remote financial entity. Following receipt of an indication of a successful authentication and identification of said user by the identification wallet, the remote financial entity is configured to:
- generate credentials associated to a bank account of the user;
- provision a financial namespace in the identification wallet, said financial namespace comprising the credentials and a data element identifying a financial transaction action to be triggered upon receipt of a document request targeting the data element; and
- associate said credentials with said data element.

Advantageously, following receipt by the identification wallet of the document request sent by a payment terminal for performing a payment transaction and upon a successful verification by said identification wallet of consent of said user for said payment transaction, the system may be configured to:
- trigger generation by the identification wallet of both an attestation of said credentials and a crypto-proof assigned to the payment transaction as defined by the financial transaction action which is identified by the data element;
- transmit a response comprising both said attestation and crypto-proof to the remote financial entity through the payment terminal; and
- authorize the payment transaction by the remote financial entity only if both said attestation and crypto-proof are found to be valid by the remote financial entity.

Advantageously, the document request may comprise both the data element, a type of the payment transaction and an amount of the payment transaction.

Advantageously, the credentials may comprise both a first reference of bank account of the user and a second reference of a secret key.

Advantageously, the identification wallet may be a mobile driver's license wallet or an EU Digital Identity wallet as defined by eIDAS specifications.

Advantageously, the communicating equipment may be a smartphone, a digital watch or a connected wearable apparatus.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for enrolling a payment instrument in a communicating equipment of a user according to an example of the invention;
- Figure 2 shows a second exemplary flow diagram for performing a payment transaction using a payment instrument enrolled in a communicating equipment according to an example of the invention;
- Figure 3 shows an exemplary structure of a document request and a document response which may be used to perform a payment transaction relying on a payment instrument enrolled in a communicating equipment according to an example of the invention; and
- Figure 4 shows a diagram of architecture of a system for enrolling a payment instrument in a communicating equipment according to an example of the invention.

### (Detailed description of the preferred embodiments)

The invention may apply to any communicating equipment hosting an electronic identification wallet. An electronic identification wallet is able to provide a trusted proof of an individual identity. Identification wallets encompass both identity wallets designed to store credentials linked to an identity document (like a digital passport or a digital identity card for instance) and driving license wallets designed to store credentials linked to the driving license of an individual.

Thus, in the present document, the identification wallet may be a mobile driver's license wallet, or an identity wallet like an EU Digital Identity wallet as defined by eIDAS2 specifications.

The communicating equipment can be a smartphone, a connected digital watch, a connected wearable apparatus, or a personal digital assistant (PDA) for instance.

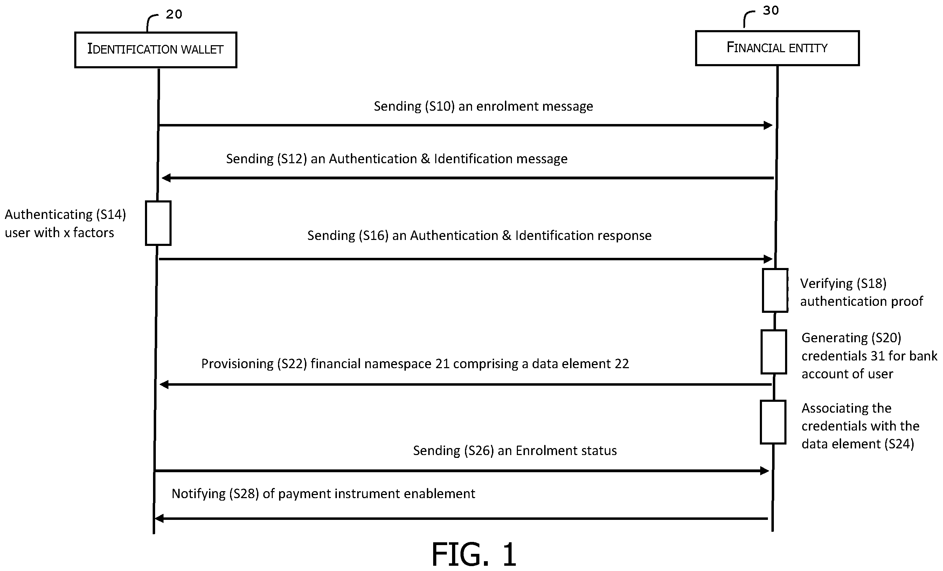

Fig. 1 depicts a first exemplary flow diagram for enrolling a payment instrument in a communicating equipment of a user according to an example of the invention.

In this example, the communicating equipment is the smartphone of a user. An identification wallet has been previously installed in the smartphone. The identification wallet contains trusted identity credentials of the user.

The user is a client of a financial entity 30 (like a bank). The user has a bank account opened with the financial entity.

To start the process of enrollment of a new payment instrument, the user may trigger the sending of an enrollment message to a financial entity (step S10).

Typically, the financial entity may be a bank comprising one or more frontend servers and one or more backend servers.

In some embodiments, the ID wallet (also named mobileID application) is enabled to respond to any request complying with the standards ISO/IEC 18013-5 and 18013-7 and ISO/IEC 23220-4. A frontend server of the financial entity (or a bank terminal) can implement the reader application that is the counterpart of the mobileID application, both being specified in the series of mentioned-above standards.

Thus, the user may use their mobile device to get connected to bank and to click on enrolment request on bank site, such as the bank may return engagement data to the ID wallet. These engagement data can convey to the ID wallet the necessary information to proceed with the transaction (ephemeral public key to establish a secure session, the device retrieval method describing the type of supported handover method and some connection details related to wireless protocol, the Origin info about the source of the engagement structure etc.). Then the ID wallet can establish a session with the bank terminal and receive a request from bank terminal to perform some identification treatments.

The smartphone may send the enrollment message to a frontend server of the financial entity through any combination of wireless networks (like Telecom network, Wi-Fi, or Bluetooth^{®}) and wired private or public communication networks. Typically, the enrollment message could be conveyed through a combination of a Telecom network and the Internet. In some embodiments, the enrollment message may be sent through a channel compliant with ISO/IEC 18013-5 standard.

In turn, the financial entity can send to the identification wallet a request for authentication and identification of the user (step S12). Such a request may rely on features specified in ISO/IEC 23220-4 standard. For instance, this request may be a Credential Holder Verification (CHV) specifying a target Level of Assurance (LoA as defined by eIDAS regulations).

Upon receipt of the request for authentication and identification, the identification wallet can request the user to provide one or more authentication data through the user interface of the smartphone (step S14). Multiple authentication factors may be used depending on the security requirements. For instance, both biometric data and a secret password can be requested from the user.

After a successful check of the authentication data provided by the user, the identification wallet can send to the financial entity an authentication and identification response comprising an indication of a successful authentication and identification of the user by the identification wallet (step S16).

After verifying (step S18) the presence of the indication of a successful authentication and identification of the user in the received response, the financial entity can generate credentials 31 associated to the bank account of the user (step S20).

Then, the financial entity can provision a financial namespace 21 in the identification wallet, said financial namespace comprising a data element 22 that identifies a financial transaction action to be triggered upon receipt of a document request targeting the data element (step S22). The financial namespace also comprises the credentials 31 associated to the bank account. Such a provision can be performed by a data sending relying on features specified in ISO/IEC 23220-3 standard for instance.

A namespace is a virtual container referenced by reverse domain naming convention (e.g. org.iso.18013.5.1) It can be implemented as a file, a data object or any other proper structure. A namespace hosts data element. Data elements can be either attributes or actions. A namespace can be hosted by a docType structure that represent another virtual container. It should be noted that a namespace belongs to an issuer. In the present example, the bank can have its own reserved namespace and can nest within such namespaces(s) its specific actions that trigger as many operations as needed for financial services. The access to bank namespace(s) is preferably protected against unauthorized reader such as to allow only the bank (identified through its certificate for instance) to trigger the actions.

In some embodiments, the credentials may comprise a reference of the bank account of the user. For instance, the credentials may comprise a Primary Account Number (PAN) or an International Bank Account Number (IBAN).

In some embodiments, the credentials may comprise the name (or a reference) of the user of the bank account.

In some embodiments, the credentials may comprise a reference of one or more secret keys. For instance, the credentials may comprise an identifier of a keyset and the corresponding key values.

In some embodiments, the credentials may comprise a validity expiration date.

In parallel (i.e. before, during or after the provisioning step), the financial entity can associate the credentials with the data element (step S24) and store this association in its non-volatile memory.

In some embodiments, the identification wallet may send to the financial entity a message comprising a status reflecting the successful enrolment of the payment instrument (step S26). In other words, the status can reflect the enablement of a new payment function in the identification wallet.

In some embodiments, the financial entity may inform the user about the enablement of a new payment function by sending a dedicated notification message to the communicating equipment (step S28).

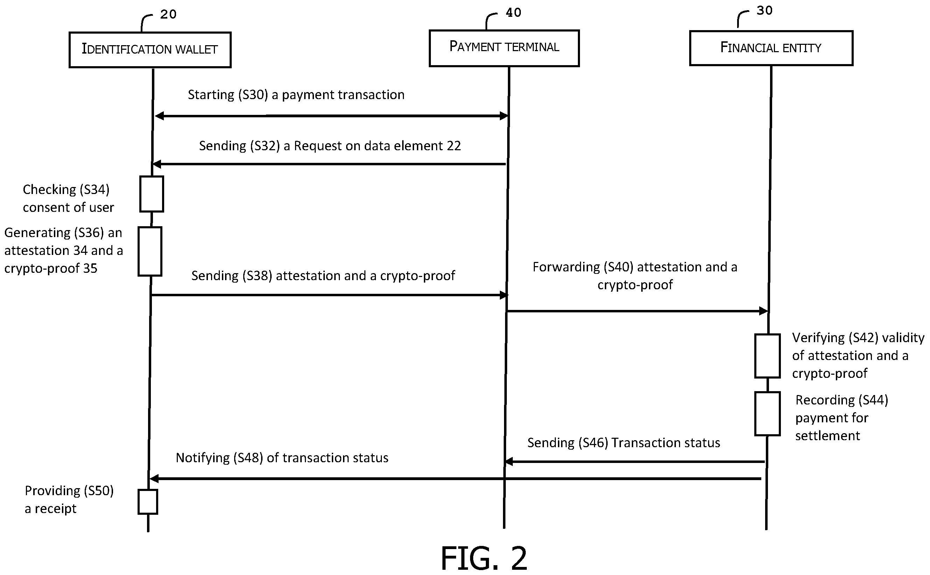

Fig. 2 depicts a second exemplary flow diagram for performing a payment transaction using a payment instrument enrolled in a communicating equipment according to an example of the invention.

In this example, a payment instrument has been enrolled in the identification wallet as detailed in Figure 1.

The user may select the enrolled payment instrument to be used for performing a payment transaction.

In some embodiments, in both the reader engagement data and the following request from the bank to the wallet, the very namespace that is targeted by the bank can be denoted in the request and the user will just have to consent on the action requested by the bank to select the enrolled payment instrument.

In some embodiments, an action triggered by a bank (by requesting a specific action from within a namespace) may entail an interaction with a digital payment card by using a custom URL scheme, assuming that the digital payment card is configured to receive and execute the corresponding request coming along the custom URL scheme call from the ID wallet.

The payment transaction can start in a conventional way by exchanging data between the payment terminal 40 of a merchant and the identification wallet (step S30). In some embodiments, the first transaction messages may be sent through a channel compliant with ISO/IEC 18013-5 standard.

Then, the payment terminal can send to the identification wallet a document request targeting the data element 22 (step S32). Such a document request may rely on features specified in ISO/IEC 23220-4 standard. For instance, this document request may be a CHV request on the data element and may comprise applicative parameters of the payment transaction. These transaction parameters may comprise the transaction type, the transaction amount, the name of the merchant, a reference of the bought service/product, a currency, and/or a seed (to be used for anti-replay purposed) for instance.

After checking that the user consents to the payment transaction (step S34), the identification wallet generates both an attestation 34 of the credentials 31 which are assigned to the financial namespace and a crypto-proof 35 which is assigned to the payment transaction as defined by the financial transaction action which is identified by the data element (step S36).

The attestation asserts both the type of authentication factor(s) used by the identification wallet and the level of assurance achieved.

The attestation can be generated by the ID wallet further to a request based on CHV (credential holder verification) method that is described in ISO/IEC 23220-4. Some embodiments of the invention enhance the attestation and crypt-proof usage to financial sector. Such CHV-based request may target an action within namespaces and it can come with specific requirements as (for instance, requirements specifying which authentication level/strength is needed to generate the attestation). Then, depending on the action, specific data representing the attestation are returned. The very nature of the data contained in the attestation can be defined by a profile which is business dependent.

Such an attestation can be signed with a dedicated key (endorsed by either the ID wallet issuer or the bank depending on the business agreement between parties).

The attestation can comprise either transaction data alone, or transaction data and indications on the type of authentication or user verification that was performed by the mobile phone.

In some embodiments, the attestation can contain useful additional information that is delivered by the mobile phone to assert further details of the transaction For instance, the attestation can give an URL where the verifier can retrieve some data related to the transaction as example in real state ownership transfer, it can points to some notarial documents, etc.

In some embodiments, the attestation can be either a document per se, or a reference to an external document.

In some embodiments, the attestation can explicitly describe the nature of the crypto-proof, or provide other kind of information.

In some embodiments, the content of the attestation is the very value of the data element (within the namespace targeted by the request) that embody the action. Thus, once the action data element is executed, the ID wallet can return its value, and this value can be something set by the bank (an assertion) in advance and hard coded as the value to be returned when an action is triggered upon request.

In some embodiments, the identification wallet may generate the crypto-proof using a cryptographic function (like a SHA-2 or SHA-3 hash function for instance) applied to a subset of transaction parameters.

It should be noted that the identification wallet is authorized to automatically generate both the attestation and the crypto-proof without attempting to identify or authenticate the user during the payment transaction. Thus, thanks to some embodiments of the invention, the end user is relief from providing authentication data to the communicating equipment during a payment transaction.

Then, the identification wallet sends to the payment terminal a payment response comprising both the generated attestation and the generated crypto-proof (step S38).

In turn, the payment terminal can forward the payload of the received payment response to the remote financial entity (step S40).

In some embodiments, the payment terminal can be pre-provisioned with the URL/address/name of the relevant bank (financial entity) to which the attestation + crypto-proof must be sent. Alternatively, the payment terminal may get the URL/address/name of the relevant bank during the payment transaction.

The transaction resulting attestation and crypto-proof can be relayed to the payment terminal for settlement while the interaction representing the request/response based on ID Wallet ISO-based specification can be performed between the mobile device and an ISO reader implementing such ISO standard. In other words, the payment terminal may have been upgraded by downloading a wallet eIDAS2 reader application or the payment terminal can just act as a relay to transfer the resulting attestation/crypto proof to the financial entity.

Then, the financial entity can verify the validity of both attestation and the generated crypto-proof using user data previously stored during the enrollment phase (step S42).

Only if both said attestation and crypto-proof are found to be valid, the financial entity authorizes the payment transaction to be completed. The financial entity can record payment data for settlement (step S44) and send a transaction status to the payment terminal (step S46) .

In some embodiments, the financial entity may inform the user about the payment transaction result by sending a specific notification message directly to the communicating equipment and a transaction receipt can be provided to the user or stored for further reading (step S50).

If the financial entity refuses the payment transaction, corresponding notification messages can be sent to the payment terminal and the communicating equipment to inform about the denial of the payment transaction.

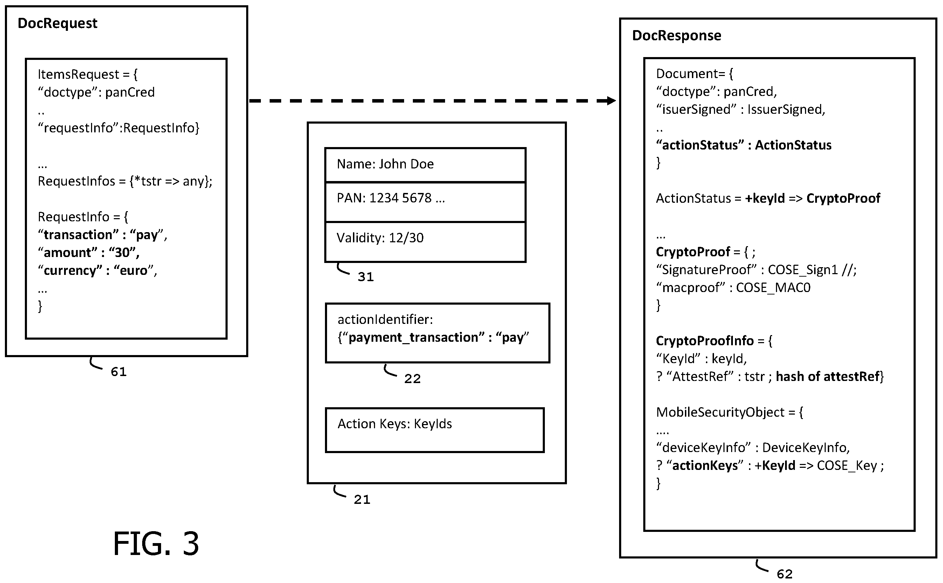

Fig. 3 depicts an exemplary structure of a document request and a document response which may be used to perform a payment transaction relying on a payment instrument enrolled in a communicating equipment according to an example of the invention.

In this example, a payment instrument has been enrolled in the identification wallet as detailed in Figure 1. The identification wallet comprises a financial namespace 21 including both credentials 31 associated with a bank account of the user and a data element 22 identifying a financial transaction action to be triggered upon receipt of a document request targeting the data element.

The credentials 31 comprises the name of the user (John Doe), a reference of the user bank account (PAN) and a validity date (December 31, 2030).

The data element 22 comprises an action identifier set to "pay" which means "payment transaction".

The data element 22 comprises identifiers of keys (KeyIds) to be used for generating the credentials and the crypto-proof.

The document request 61 is a specific request intended to be sent for reaching a document installed in an identification wallet. Preferably the document request 61 complies with ISO/IEC 23220-4 standard.

During a payment transaction, a payment terminal sends the document request 61 which targets the data element 22.

In the example of Figure 3, the document request 61 contains the following transaction parameters: the transaction type ("pay"), the transaction amount ("30) and the transaction currency ("Euro").

In response to the document request 61, the identification wallet can build a document response 62 comprising an attestation of the credentials 31 and the crypto-proof which can be computed as a signature using keys whose identifier (and values) are specified in the financial namespace 21 storing the data element 22.

In some embodiments, payment credential can include all (or a subset of) the items identified by the namespace 21 and be attested by financial institution, binding the payment credential to the "DeviceKey" and "ActionKey" through the "MobileSecurity Object" (MSO). This binding is verifiable through the "issuerSigned" object.

"ActionStatus" can include the crypto-proof ("CryptoProof") that can be computed based on the hash value of transaction data (amount, currency, ...) and signed by the "ActionKey". Overall transaction session can be bound to the "DeviceKey".

Thus, by parsing the content of the received document response 62, the financial entity can check a trusted proof that user has authorized and provided consent to the payment transaction.

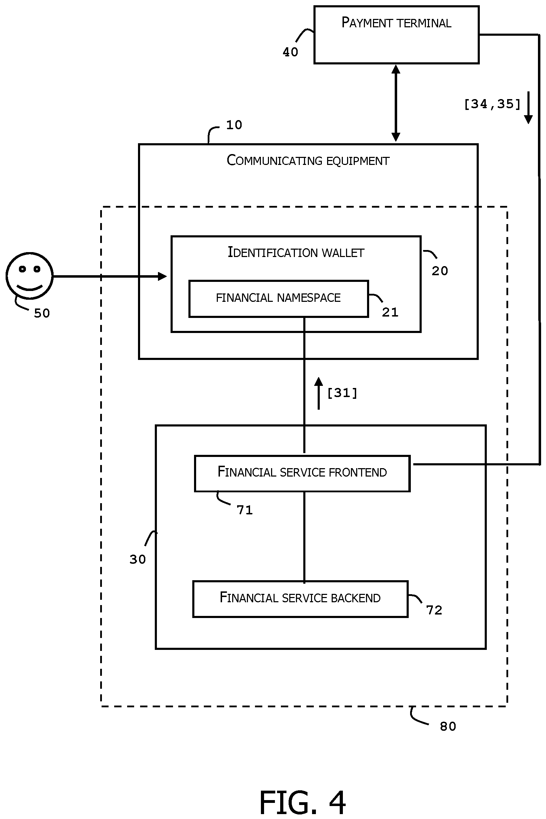

Fig. 4 depicts a diagram of architecture of a system 80 for enrolling a payment instrument in a communicating equipment according to an example of the invention.

In this example, the system 80 comprises a financial entity 30 and an identification wallet 20.

The financial entity 30 is a remote entity because it is place remotely from the appliance 10 hosting the identification wallet.

In the example of Figure 4, the financial entity 30 comprises a financial service frontend 71 coupled to a financial service backend 72.

The financial service frontend 71 is configured to communicate with the identification wallet through conventional communication networks. The financial service frontend 71 may include one or more hardware servers comprising one or more physical processors and memories storing programs instructions which, when executed by the physical processors, provide the functions of the financial service frontend 71.

Similarly, the financial service backend 72 may include one or more hardware servers comprising one or more physical processors and memories storing programs instructions which, when executed by the physical processors, provide the functions of the financial service backend 72.

The appliance 10 is a communicating equipment which can be a mobile phone for instance. The communicating equipment 10 comprises a first communication interface able to exchange data with the financial service frontend 71 either directly or through an intermediary local apparatus (especially when the communicating equipment is a wearable device). The communicating equipment 10 comprises a second communication interface able to exchange data with a payment terminal. The second communication interface may comply with a proximity communication protocol like a Near Field Communication (NFC) protocol, Wi-Fi or BLE^{®} (Bluetooth Low Energy) for instance.

Upon receipt of an indication of a successful authentication and identification of the user 50 of the communicating equipment 10 by the identification wallet 20, the remote financial entity 30 is configured to:
- generate credentials 31 associated to a bank account of the user,
- provision a financial namespace 21 in the identification wallet 20, and
- associate the generated credentials 31 with the data element 22.

The financial namespace comprises the credentials 31 and the data element 22 which identifies a financial transaction action to be triggered upon receipt of a document request targeting the data element during a further transaction.

In some embodiments, the financial service frontend 71 can be configured to check the validity of the content of the authentication and identification response sent by the identification wallet (See step S18 of Fig. 1) and the financial service backend 72 can be configured to generate the credentials 31 (See step S20 of Fig. 1).

The system 80 allows to perform payment transactions using the enroll payment instrument. In some embodiments, following receipt by the identification wallet 20 of a document request sent by a payment terminal 40 for performing a payment transaction and upon a successful verification by the identification wallet of the consent of said user to perform the payment transaction, the system 80 can be configured as follows.

The identification wallet can automatically generate an attestation 34 of the credentials 31 and a crypto-proof 35 which is assigned to the payment transaction as defined by the financial transaction action which is identified by the data element 22.

The identification wallet can transmit a response comprising both the generated attestation 34 and the crypto-proof 35 to the remote financial entity 30 through the payment terminal 40.

The remote financial entity 30 can be set to authorize the payment transaction only if both the attestation and crypto-proof are found to be valid by the remote financial entity.

Thanks to some embodiments of the invention, a payment capability can be smoothly enabled into a wallet initially designed for people identification only. The payment capability is enabled by enrolling a payment instrument linked to the bank account assigned to the user. Thus, payment transaction may take place from within an identification wallet.

Some embodiments of the invention spare the need for the payment terminal and the communicating equipment to perform multi-document requests to achieve both the identification and the payment transaction. Indeed, sending of a single document request can be sufficient to complete the full payment transaction.

Thanks to some embodiments of the invention, there is no need to download and install a new payment application in the communicating equipment for enabling a payment capability.

The invention is not limited to the described embodiments or examples. In particular, the described examples and embodiments may be combined.

The invention is not limited to enrollment of a single payment instrument in the identification wallet. A plurality of payment instruments (issued by a single or a plurality of banks) can be enrolled in the identification wallet.

Some embodiments of the invention are extensible to support other types of transaction such as ownership of assets transfer, accepting terms and conditions, or generic transaction signing use cases requiring strong authentication and identification.

The invention is well suited for systems in which a user installed an identification wallet in their own portable device like a smartphone, connected watch, a connected bracelet or a tablet PC.

## Claims

1. A method for enrolling a payment instrument issued by remote financial entity (30) for a user (50) in a communicating equipment (10) hosting an identification wallet (20),
wherein following receipt by the remote financial entity (30) of an indication of a successful authentication and identification of said user by the identification wallet (20), the method comprises:
generating, by the remote financial entity (30), credentials (31) associated to a bank account of the user;
provisioning, by the remote financial entity (30), a financial namespace (21) in the identification wallet (20), said financial namespace comprising the credentials and a data element (22) identifying a financial transaction action to be triggered upon receipt of a document request targeting the data element; and
associating, by the remote financial entity (30), said credentials (31) with said data element (22).

2. The method according to claim 1, wherein following receipt by the identification wallet (20) of said document request, the document request being sent by a payment terminal (40) for performing a payment transaction, the method further comprises:
a successful verification by said identification wallet (20) of consent of said user for said payment transaction triggers generating by the identification wallet (20) both an attestation (34) of said credentials (31) and a crypto-proof (35) assigned to the payment transaction as defined by the financial transaction action which is identified by the data element (22);
following receipt by the payment terminal (40) of a response comprising both said attestation and crypto-proof, forwarding said response to the remote financial entity (30); and
authorizing the payment transaction by the remote financial entity (30) only if both said attestation and crypto-proof are found to be valid by the remote financial entity (30).

3. The method according to claim 2, wherein the document request comprises both the data element (22), a type of the payment transaction and an amount of the payment transaction.

4. The method according to any of the preceding claims, wherein the credentials (31) comprises both a first reference of bank account of the user and a second reference of a secret key.

5. The method according to any of the preceding claims, wherein the identification wallet (20) is a mobile driver's license wallet or an EU Digital Identity wallet as defined by eIDAS specifications.

6. The method according to any of the preceding claims, wherein the communicating equipment (10) is a smartphone, a digital watch or a connected wearable apparatus.

7. A system (80) for enrolling a payment instrument issued by remote financial entity (30) for a user (50) in a communicating equipment (10) hosting an identification wallet (20), the system comprising the remote financial entity (30),
wherein, following receipt of an indication of a successful authentication and identification of said user by the identification wallet (20), the remote financial entity (30) is configured to:
generate credentials (31) associated to a bank account of the user;
provision a financial namespace (21) in the identification wallet (20), said financial namespace comprising the credentials and a data element (22) identifying a financial transaction action to be triggered upon receipt of a document request targeting the data element; and
associate said credentials (31) with said data element (22).

8. The system according to claim 7, wherein following receipt by the identification wallet (20) of the document request sent by a payment terminal (40) for performing a payment transaction and upon a successful verification by said identification wallet (20) of consent of said user for said payment transaction, the system is configured to:
trigger generation by the identification wallet (20) of both an attestation (34) of said credentials (31) and a crypto-proof (35) assigned to the payment transaction as defined by the financial transaction action which is identified by the data element (22);
transmit a response comprising both said attestation and crypto-proof to the remote financial entity (30) through the payment terminal (40); and
authorize the payment transaction by the remote financial entity (30) only if both said attestation and crypto-proof are found to be valid by the remote financial entity (30).

9. The system according to claim 8, wherein the document request comprises both the data element (22), a type of the payment transaction and an amount of the payment transaction.

10. The system according to any of the claims 7 to 9, wherein the credentials (31) comprises both a first reference of bank account of the user and a second reference of a secret key.

11. The system according to any of the claims 7 to 10, wherein the identification wallet (20) is a mobile driver's license wallet or an EU Digital Identity wallet as defined by eIDAS specifications.

12. The system according to any of the claims 7 to 11, wherein the communicating equipment (10) is a smartphone, a digital watch or a connected wearable apparatus.
